(19) Europäisches Patentamt / European Patent Office / Office européen des brevets

(11) **EP 3 168 487 B1**

(12) **EUROPEAN PATENT SPECIFICATION**

(45) Date of publication and mention
of the grant of the patent:
**14.11.2018 Bulletin 2018/46**

(21) Application number: **15837568.3**

(22) Date of filing: **31.08.2015**

(51) Int Cl.:
***F16C 32/04*** *(2006.01)*

(86) International application number:
**PCT/JP2015/004412**

(87) International publication number:
**WO 2016/035318 (10.03.2016 Gazette 2016/10)**

(54) **MAGNETIC BEARING**

MAGNETLAGER

PALIER MAGNÉTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.09.2014 JP 2014176920**

(43) Date of publication of application:
**17.05.2017 Bulletin 2017/20**

(73) Proprietor: **Daikin Industries, Ltd.**
**Osaka 530-8323 (JP)**

(72) Inventors:
• **SAKAWAKI, Atsushi**
**Osaka-shi, Osaka 530-8323 (JP)**

• **NAKAZAWA, Yuji**
**Osaka-shi, Osaka 530-8323 (JP)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**JP-A- 2001 339 979     JP-A- 2002 310 152
JP-A- 2003 056 489     JP-A- 2013 068 309**

**Description**

TECHNICAL FIELD

This invention relates to a magnetic bearing supporting a drive shaft with no contact between the magnetic bearing and the drive shaft.

BACKGROUND ART

Employing magnetic bearings as a bearing in a drive shaft of, for instance, a compressor is known in the art (see, e.g., Patent Document 1). Patent Document 1 provides an example of an axial magnetic bearing including a rotating member (drive shaft), a tab axially aligned with the drive shaft, a C-shaped member arranged so as to enclose the tab, a permanent magnet installed in a center of the C-shaped member such that a north pole of the permanent magnet faces a radial end face of the tab, and a coil arranged in the C-shaped member. In this magnetic bearing, the drive shaft is supported with no contact between the magnetic bearing and the drive shaft by means of appropriately adjusting a current flowing through the coil thereby adjusting an axial magnetic force exerted on the rotating member.

In such a magnetic bearing, an overload on the drive shaft requires an amplification of electromagnetic force by increasing a current flowing through an electromagnet.

CITATION LIST

PATENT DOCUMENTS

PATENT DOCUMENT 1: Japanese Unexamined Patent Publication No. H10-501326

JP 2013-68309 A discloses the features of the preamble of claim 1.

SUMMARY OF THE INVENTION

TECHNICAL PROBLEM

However, a characteristic feature of electromagnets is that an individual difference between magnetic fluxes produced by the electromagnets increases if intensity of the magnetic flux surpasses a certain threshold value. As a result, in a region beyond the threshold value, position control of the drive shaft becomes difficult. Even if a current flowing through the electromagnet and an electromagnetic force are increased in accordance with a load on the drive shaft, the position can only be controlled within a control region, which does not surpass the threshold value. As a countermeasure, it is conceivable to extend the control region by employing a larger electromagnet. This, however, involves problems such as an increased size of the magnetic bearing and cost increase.

In view of the foregoing problem, the present invention allows for position control in the magnetic bearing even in a region with a large individual difference between magnetic fluxes (electromagnetic forces).

SOLUTION TO THE PROBLEM

To solve the above problem, a first aspect relates to a magnetic bearing including:

a stator (21) having a plurality of electromagnets (27) which apply electromagnetic force to a drive shaft (13); and a controller (30) performing position control of the drive shaft (13) by dividing a control region in two control regions based on an extent of an individual difference between the electromagnets (27) regarding a correlation between two or more parameters among a current (i) flowing through the electromagnets (27), the number of flux linkages (ψ) passing through the electromagnets (27), a gap width (G) between the stator (21) and the drive shaft (13), magnetic energy (Wm) of the electromagnets (27), magnetic co-energy (Wm') in the electromagnets (27), electromagnetic force generated by the electromagnets (27), and a parameter calculated based on these parameters, and by using a control model common for all of the electromagnets (27) for a first control region (A1), which a control region with a small individual difference, and control models provided one for each of the electromagnets (27) or for each of a predetermined number of electromagnet groups for a second control region (A2), which is a control region with a large individual difference.

In this configuration, the control region is divided in two regions in accordance with the individual difference of the electromagnets (27). In the second control region (A2), which is the control region with the larger individual difference, the electromagnetic force is controlled using a control model provided for each of the electromagnets (27) or one for each of a predetermined number of electromagnet groups.

A second aspect is an embodiment of the first aspect, wherein

the correlation may be a correlation between the current (i) flowing through the electromagnets (27), the gap width (G), and the electromagnetic force, and

the controller (30) may perform the position control of the drive shaft (13) by controlling the electromagnetic force by dividing the control region in two control regions based on the extent of the individual difference between the electromagnets (27) regarding a relationship between the current (i) flowing through the electromagnets (27), the gap width (G), and the electromagnetic force, and by using the control model common for all of the electromagnets (27) in the first control region (A1), which is the control region with the small individual difference, and the control models provided one for each of the electromagnets (27) or for each of the predetermined number of electromagnet groups for the second control region (A2), which the control region with the large individual difference.

In this configuration, in the second control region (A2), which is the control region with the larger individual difference regarding the relationship between the current, gap width and electromagnetic force, the electromagnetic force is controlled using control models provided one for each of the electromagnets (27) or one for each of a predetermined number of electromagnet groups.

Further, in a third aspect, which is an embodiment of the second aspect, the electromagnetic bearing may include:

an electromagnetic force calculator (41) calculating, based on the control model for the first control region (A1), a resultant force including a combination of electromagnetic forces generated by the electromagnets (27) controlled within the first control region (A1), and calculating, based on this resultant force, an electromagnetic force generated by the electromagnets (27) controlled within the second control region (A2) in a state where the position control is performed by controlling part of the electromagnets (27) within the second control region (A2) and other predetermined electromagnets (27) within the first control region (A1); and

a control model building unit (40) building the control model used for the second control region (A2) based on the electromagnetic force of the electromagnets (27) controlled within the second control region (A2), the electromagnetic force having been calculated by the electromagnetic force calculator (41).

In this configuration, the electromagnetic force of the electromagnets (27) controlled within the second control region (A2) is determined based on the resultant electromagnetic force of the electromagnets (27) controlled within the first control region (A1). By this, the control model used in the second control region (A2) is built.

Moreover, in a fourth aspect, which is an embodiment of the third aspect,

the electromagnetic force calculator (41) may calculate in advance an electromagnetic force, which allows the drive shaft (13) to levitate at low load, based on the control model for the first control region (A1), and may determine a difference between the electromagnetic force and the resultant force already calculated as the electromagnetic force generated by the electromagnets (27) controlled within the second control region (A2).

In this configuration, the electromagnetic force at low load is determined in advance, and this value is used to determine the electromagnetic force in the second control region (A2).

Furthermore, in a fifth aspect, which is an embodiment of the third or fourth aspect,

in a state where the position control is performed by controlling part of the electromagnets (27) within a third control region (A3), in which electromagnetic force generated is stronger than in the second control region (A2), and predetermined other part of the electromagnets (27) within the second control region (A2) or the first control region (A1), the electromagnetic force calculator (41) may calculate, based on the control models for the second control region (A2) or the first control region (A1), the electromagnetic force generated by the electromagnets (27) controlled within the second control region (A2) or the first control region (A1), and may calculate, based on the electromagnetic force calculated, the electromagnetic force generated by the electromagnets (27) controlled within the third control region (A3), and

the control model building unit (40) builds a control model used for the third control region (A3) based on calculation results provided by the electromagnetic force calculator (41).

In this configuration, in the second control region (A2), in which the electromagnets have become controllable due to building the control model, or the first control region (A1), the electromagnets (27) are operated, and, based on their electromagnetic force, the electromagnetic force of the electromagnet(s) (27) controlled within the third control region (A3) is determined. By this, the control model used for the third control region (A3) is built.

In a sixth aspect, which is an embodiment of the first aspect,

the correlation may be a correlation between the number of flux linkages ($\psi$), the gap width (G), and the electromagnetic force, and

the controller (30) may control the position of the drive shaft (13) by controlling the electromagnetic force by dividing the control region in two control regions based on the extent of the individual difference between the electromagnets (27) regarding the relationship between the number of flux linkages ($\psi$), the gap width (G), and the electromagnetic force, and by using the control model common for all of the electromagnets (27) for the first control region (A1), which is the control region with the small individual difference, and the control models provided one for each of the electromagnets (27) or one for each of a predetermined number of electromagnet groups for the second control region (A2), which is the control region with the large individual difference.

In this configuration, in the second control region (A2), which is the region with the large individual difference regarding the relationship between the number of flux linkages, the gap width, and the electromagnetic force, the electromagnetic force is controlled by using the control models provided one for each of the electromagnets (27) or one for each of a predetermined number of electromagnet groups.

In a seventh aspect, which is an embodiment of the sixth aspect,
the controller (30) may determine the number of flux linkages ($\psi$) based on a value obtained by temporally integrating a voltage applied to the coil (25) of the electromagnets (27).

In an eighth aspect, which is an embodiment of the sixth aspect,
the controller (30) may determine the number of flux linkages ($\psi$) based on a value obtained by temporally integrating a voltage resulting from deducting a voltage drop of the coil (25) from a voltage applied to the coil (25) of the electromagnets (27).

In a ninth aspect, which is an embodiment of any one of the first to eighth aspects,
a core (22), which is the stator (21), may be formed by combining a plurality of core blocks (22a).

In this configuration, dividing the core (22) into the core blocks (22a) allows for employing a variety of techniques for, for example, winding the coil.

## ADVANTAGES OF THE INVENTION

According to the first and second aspects, the position control in the magnetic bearing may be performed even in a region (e.g., in a saturated region, which will be described later) with a large individual difference between the electromagnetic forces.

According to the third aspect, when building the control model for the second control region (A2), the electromagnets of the magnetic bearing are used as basis for calculating the electromagnetic force, which is why it may be unnecessary to provide a specific measuring device for building the control model.

Further, according to the fourth aspect, the electromagnetic force in the second control region (A2) may be calculated more accurately.

Moreover, according to the fifth aspect, the control region may be extended.

Furthermore, according to the sixth aspect, the position control in the magnetic bearing may be possible even in a region (e.g., in a saturated region, which will be described later) with a large individual difference between the electromagnetic forces.

In the seventh or eighth aspects, the number of flux linkages may be calculated.

Moreover, in the ninth aspect, production of the stator (e.g., coil winding) may be simplified.

## BRIEF DESCRIPTION OF THE DRAWINGS

[FIG. 1] FIG. 1 is a schematic view showing a configuration of a turbo-compressor of a first embodiment.
[FIG. 2] FIG. 2 is a cross-sectional view of a magnetic bearing of the first embodiment.
[FIG. 3] FIG. 3 shows forces exerted on a drive shaft by each of electromagnets.
[FIG. 4] FIG. 4 shows a correlation between an intensity of a current and a magnetic flux of an electromagnet.
[FIG. 5] FIG. 5 shows a relationship between a current and an electromagnetic force.
[FIG. 6] FIG. 6 illustrates an example border between a saturated region and an unsaturated region with current and gap width used as parameters.
[FIG. 7] FIG. 7 is a block diagram of a controller and a control model building unit of the first embodiment.
[FIG. 8] FIG. 8 is a flowchart showing how a control model is built.
[FIG. 9] FIG. 9 illustrates an example relationship between electromagnetic forces of each of the electromagnets when a control model is built.
[FIG. 10] FIG. 10 shows electromagnetic forces of a magnetic bearing of a second embodiment.
[FIG. 11] FIG. 11 shows an example division of a core.

DESCRIPTION OF EMBODIMENTS

In the following, embodiments of the present invention are described with reference to the drawings. Note that the following embodiments are beneficial examples in nature, and are not intended to narrow the scope, applications, or use of the present invention.

«First Embodiment of Invention»

In the scope of a first embodiment of the present invention, a turbo-compressor, in which a magnetic bearing is employed, will be explained. This turbo-compressor is connected to a refrigerant circuit (not shown) performing a refrigeration cycle operation by circulating a refrigerant, and compresses the refrigerant.

<Overall Configuration>

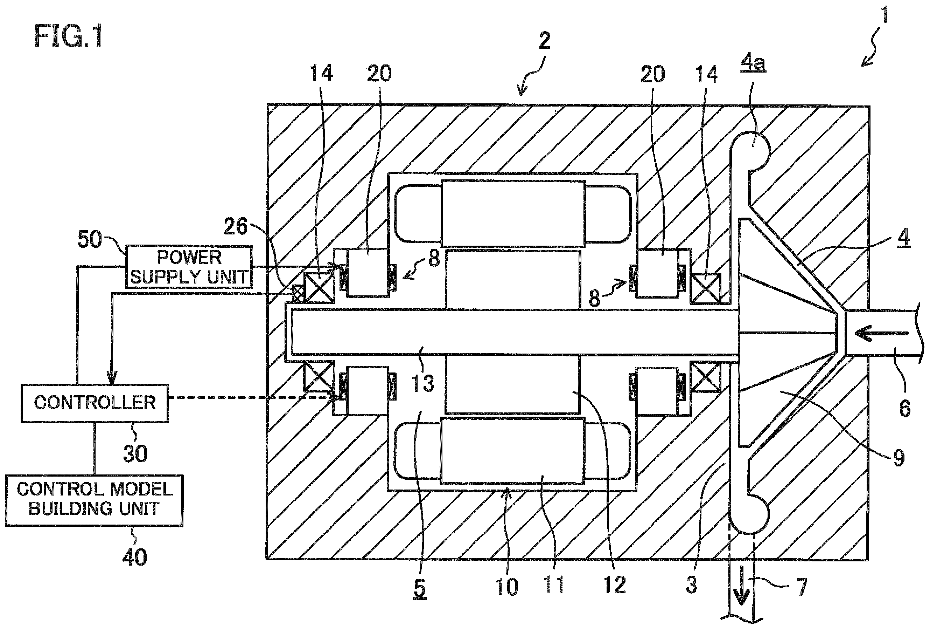

FIG. 1 is a schematic view showing a structure of the turbo-compressor (1). This turbo-compressor (1) includes a casing (2), a bearing mechanism (8), an impeller (9), and an electric motor (10).
The casing (2) has the shape of a cylinder having both ends closed and is positioned such that an axis line of the cylinder is horizontally oriented. A space in the casing (2) is partitioned by a wall (3). A space to the right of the wall (3) is an impeller chamber (4) housing the impeller (9), whereas a space to the left of the wall (3) houses the electric motor (10). A compression space (4a) communicating with the impeller chamber (4) is formed at an outer circumferential side of the impeller chamber (4). An intake pipe (6) for introducing the refrigerant of the refrigerant circuit into the impeller chamber (4), and a discharge pipe (7) for returning the high-pressure refrigerant compressed in the impeller chamber (4) to the refrigerant circuit, are connected to the casing (2).
The impeller (9) includes a plurality of blades which are arranged such that the impeller (9) has a substantially conical outer shape. The impeller (9) is housed in the impeller chamber (4) while fixed to an end of a drive shaft (13) of the electric motor (10).
The electric motor (10) is accommodated in the casing (2) and drives the impeller (9). This electric motor (10) includes a stator (11), a rotor (12), and the drive shaft (13). For example an interior permanent magnet motor (i.e., an IPM motor) is employed as the electric motor (10). The drive shaft (13) is arranged horizontally inside the casing (2) and fixed to the rotor (12).
The bearing mechanism (8) includes two touchdown bearings (14, 14) and two magnetic bearings (20, 20). The touchdown bearings (14) and the magnetic bearings (20) are for supporting the drive shaft (13) in a radial direction. Note that the electric motor (8) may also include a touchdown bearing (14) supporting the drive shaft (13) in a thrust direction.
The touchdown bearings (14) and the magnetic bearings (20) are both fixed in the casing (2). The two magnetic bearings (20) are arranged one at each end of the drive shaft (13) so as to support both a left end and a right end of the drive shaft (13). The touchdown bearings (14) are arranged further remote from a center of the drive shaft (13) than the magnetic bearings (20, 20) such that each of the touchdown bearings (14) supports one of the both ends of the drive shaft (13).
The touchdown bearings (14) may be, for example, ball bearings. When the magnetic bearing (20) is not operating, the touchdown bearings (14) support the drive shaft (13) such that the drive shaft (13) does not come in contact with the magnetic bearing (20). Note that the touchdown bearings (14) are not limited to ball bearings.

<Configuration of Magnetic Bearing (20)>

The magnetic bearing (20) includes a plurality of electromagnets (27). The magnetic bearing (20) supports the drive shaft (13) with no contact between the magnetic bearing (20) and the drive shaft (13) by exerting a combination of electromagnetic forces (resultant electromagnetic force) generated by each of the electromagnets (27) on the drive shaft (13).

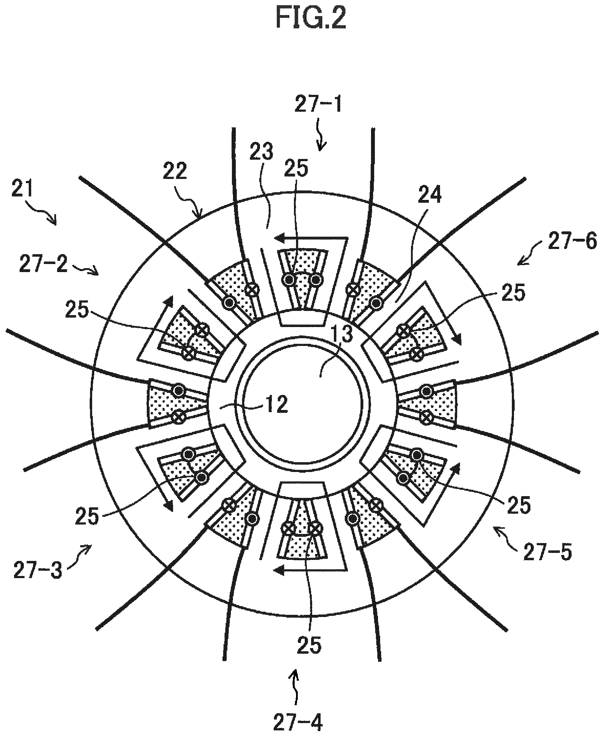

FIG. 2 is a cross-sectional view of the magnetic bearing (20) of the first embodiment. As shown in FIGS. 1 and 2, the magnetic bearing (20) is a so-called heteropolar radial bearing. The magnetic bearing (20) includes a stator (21), a gap sensor (26), the electromagnets (27), a controller (30), a control model building unit (40), and a power supply unit (50).

-Gap Sensor (26)-

The gap sensor (26) is attached to the casing (2) and detects a position of the drive shaft (13) in the radial direction with respect to the magnetic bearing (20). More specifically, the gap sensor (26) detects a distance (gap width (G)) of the drive shaft (13) to the magnetic bearing (20) in a radial direction.

-Stator (21)-

The stator (21) includes a core (22) and coils (25). The core (22) includes electromagnetic steel plates which are stacked one on top of another, and has a back yoke (23) and a plurality of teeth (24). The back yoke (23) is a member having a substantially tubular shape in the stator (21). The teeth (24) are members protruding from an inner circumferential surface of the back yoke (23) in an inward radial direction. In this example, the core (22) has twelve teeth (24). These teeth (24) are arranged along an inner circumference of the back yoke (23) and are equally spaced (pitch: 30 degrees).

In the stator (21), the coils (25) are wound one each around adjacent pairs of teeth (24). One pair of teeth (24, 24) and one coil (25) form together one electromagnet (27). More specifically, the stator (21) includes six electromagnets (27). The power supply unit (50) is connected to, and supplies power to, each of the coils (25). Note that, in order to distinguish between the electromagnets (27), in FIG. 2 each of the electromagnets (27) is identified by a reference character followed by a hyphen and a number from one to six (e.g., 27-1, 27-2 ...).

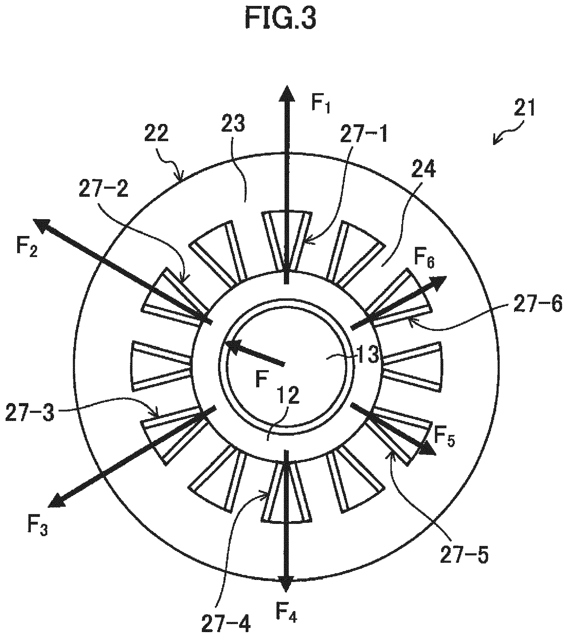

FIG. 3 shows forces exerted on the drive shaft (13) by each of the electromagnets (27). As shown in FIG. 3, in the magnetic bearing (20), a supporting force (F), which is a combination of forces (F1, F2, F3, F4, F5, F6) generated by each of the six electromagnets (27-1) to (27-6), levitates the drive shaft (13). In other words, in the magnetic bearing (20), position control (also referred to as levitation control) of the drive shaft (13) is performed by the six electromagnets (27-1) to (27-6).

-Power Supply Unit (50)-

The power supply unit (50) supplies power to each of the coils (25). This power supply unit (50) is capable of individually controlling voltage applied to each of the coils (25). Since the magnetic bearing (20) includes six coils (25), the power supply unit (50) has six outputs. The voltage the power supply unit (50) supplies to each of the coils (25) is controlled by the controller (30). Specifically, the power supply unit (50) changes its output voltage based on a voltage command value (V*) output by the controller (30). As a result, a current (i) flowing through each of the coils (25) may be modified. The power supply unit (50) may be, for example, a pulse width modulation (PWM) amplifier regulating the voltage by PWM control. Note that the power supply unit (50) of the present embodiment allows both a forward and a reverse current flow.

-Controller (30)-

The controller (30) includes a microcomputer, and a memory device (which may be an internal memory device of the microcomputer) storing a program which operates the microcomputer (omitted in the drawings). As described in detail below, the controller (30) controls each of the electromagnets (27) by dividing a control region in two regions, namely, a control region where the position control of the drive shaft (13) is performed using a control model common for all of the electromagnets (27), and a control region where the position control is performed using control models provided one for each of the electromagnets (27).

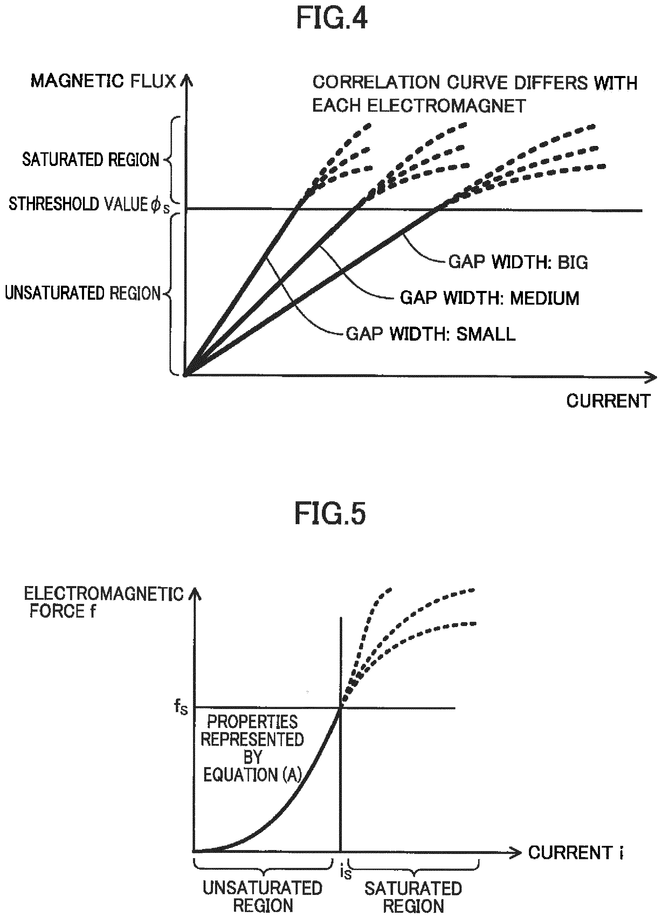

FIG. 4 shows a correlation between a current of an electromagnet and an intensity of a magnetic flux. Generally, the magnetic flux in electromagnets monotonically increases with respect to the current and monotonically decreases with respect to the gap width. Specifically, if the electromagnet is small, the relationship between the current, the gap width and the magnetic flux is defined by equation (A) as follows:

$$\text{magnetic flux} = \alpha \times (\text{current/gap width}) \ldots (A)$$

where $\alpha$ is a constant.

Further, disregarding the intensity of the magnetic flux, the relationship between the magnetic flux and the electromagnetic force in each of the electromagnets is defined by equation (B) as follows:

$$\text{electromagnetic force} = \beta \times (\text{magnetic flux})^2 \ldots (B)$$

where $\beta$ is a constant.

If intensity of the magnetic flux does not surpass a threshold value ($\varphi_S$) determined by a shape of the electromagnet and physical properties of a material the electromagnet is made from, the relationship between the current, gap width and electromagnetic force in each of the electromagnets is defined by equation (C), based on equations (A) and (B), as follows:

$$\text{electromagnetic force} = k \times (\text{current/gap width})^2 \ldots \text{(C)}$$

where k is a constant. Note that FIG. 5 shows the relationship between the current (i) and an electromagnetic force (f).

Since a variance of the constants $\alpha$, $\beta$ and k in equations (A), (B), and (C) between each of the electromagnets is small, an individual difference (variance) between the electromagnets regarding the relationship between the current, gap width, and electromagnetic force also is small.

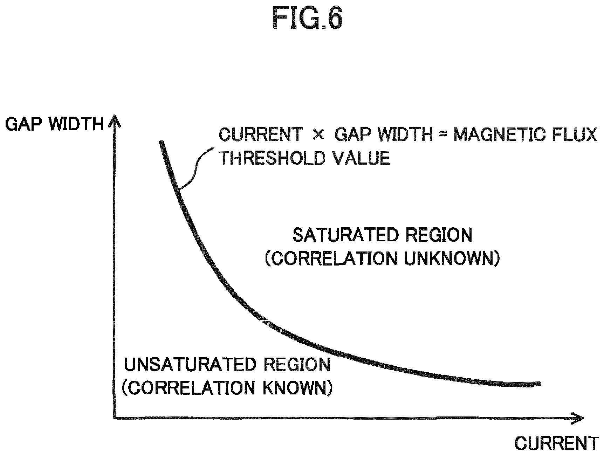

On the other hand, if the magnetic flux surpasses the threshold value ($\varphi_S$), the relationship (correlation curve) between the current, gap width, and electromagnetic force becomes a nonlinear relationship. Moreover, each of the electromagnets ends up having a different correlation curve (the individual difference increases). In the following, a range regarding the current, electromagnetic force, and gap width within which the magnetic flux does not surpass the threshold value ($\varphi_S$) is referred to as an unsaturated region, whereas a range regarding the current, electromagnetic force, and gap width within which the magnetic flux surpasses the threshold value ($\varphi_S$) is referred to as a saturated region. Note that FIG. 6 illustrates an example border between the saturated region and the unsaturated region with the current and the gap width as parameters.

In view of the abovementioned characteristics of electromagnets, the controller (30) divides the control region in two regions in accordance with the individual difference between the electromagnets (27) regarding the relationship between the current flowing through the electromagnets (27), the gap width (G) between the stator (21) and the drive shaft (13), and the electromagnetic force generated by the electromagnets (27). In the unsaturated region, which is the control region with the small individual difference, the controller (30) controls the electromagnetic force using a control model common for all of the electromagnets (27). In the saturated region, which is the control region with the large individual difference (region with a larger individual difference than the unsaturated region), the controller (30) controls the electromagnetic force using control models provided one for each of the electromagnets (27). Note that in the following the unsaturated region is referred to as a first control region (A1) and the saturated region as a second control region (A2).

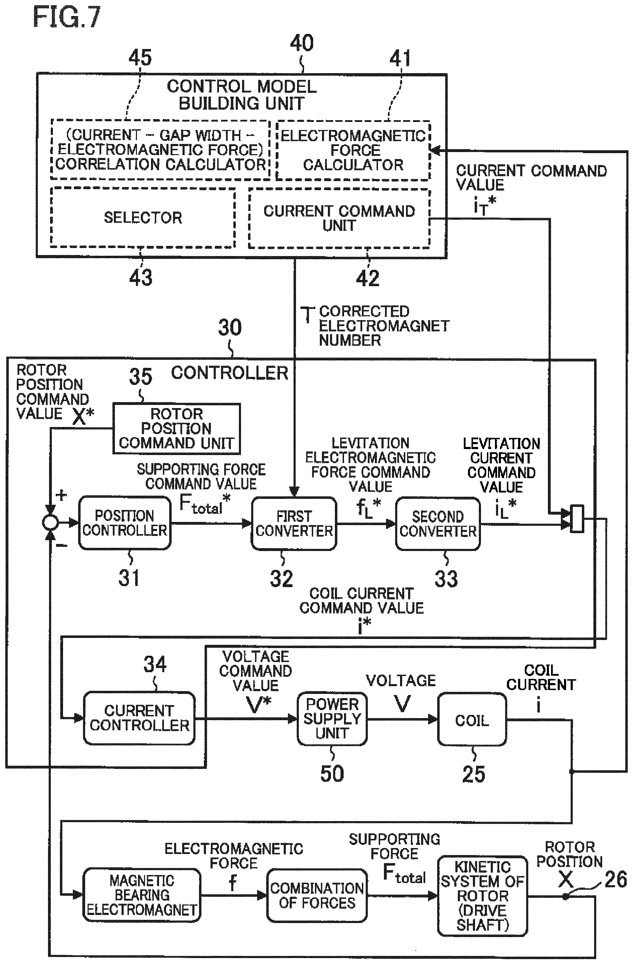

FIG. 7 is a block diagram of the controller (30) and the control model building unit (40) of the first embodiment. As shown in FIG. 7, the controller (30) includes a position controller (31), a first converter (32), a second converter (33), a current controller (34), and a rotor position command unit (35).

The rotor position command unit (35) generates a command value (rotor position command value (X*)) for the position of the drive shaft (13) in the radial direction (specifically, a distance of the drive shaft (13) to the magnetic bearing (20) in the radial direction). During normal operation, the rotor position command unit (35) generates the rotor position command value (X*) for controlling the position of the drive shaft (13). When a control model, which will be described later, is built, the rotor position command unit (35) appropriately generates the rotor position command value (X*) within a range required for building the control model.

The position controller (31) outputs, to the first converter (32), a command value (supporting force command value ($F_{total}$*)) indicating a supporting force for levitating the drive shaft (13), depending on a deviation of a target position of the drive shaft (13) in the radial direction (i.e., the rotor position command value (X*)) from an actual position of the drive shaft (13) in the radial direction detected by the gap sensor (26). Note that the supporting force is a resultant force of the electromagnetic forces of all of the electromagnets (27).

Based on the supporting force command value ($F_{total}$*), the first converter (32) calculates the electromagnetic force each of the electromagnets (27) is required to generate (in the following referred to as levitation electromagnetic force ($f_L$)). Regarding each of the electromagnets (27), the first converter (32) outputs, to the second converter (33), a command value indicating the levitation electromagnetic force ($f_L$) (levitation electromagnetic force command value ($f_L$*)).

Note that, when the control model is built, an electromagnet number (T) is entered by a selector (43) into the first converter (32). In this case, the first converter (32) outputs, to the second converter (33), the levitation electromagnetic force command value ($f_L$*) regarding the electromagnets (27) apart from the electromagnet (referred to as electromagnet for building the control model) identified with the electromagnet number (T) entered into the first converter (32).

Based on the levitation electromagnetic force command value ($f_L$*), the second converter (33) generates, and outputs to the current controller (34), a command value (levitation current command value ($i_L$*)) regarding a current (referred to as levitation current (iL)) flowing through the coil (25) of each of the electromagnets (27). In calculating the levitation current command value ($i_L$*), the second converter (33) uses a control model stored in the controller (30) (specifically, a function in a program or a table stored in a memory device). Note that, when the control model is built, the second converter (33) outputs the levitation current command value ($i_L$*) regarding the electromagnets (27) apart from the electromagnet for building the control model.

Current command values (coil current command values (i*)) corresponding to each of the electromagnets (27) are entered into the current controller (34). The current controller (34) generates, and outputs to the power supply unit (50), a voltage command value (V*), such that a voltage based on each of the coil current command values (i*) flows through each of the coils (25). Specifically, during normal operation, the levitation current command value ($i_L$*) corresponding to all magnets is entered into the current controller (34). Further, when the control model is built, the levitation current command value ($i_L$*) corresponding to levitating electromagnets (which will be described later) as well as a current command value ($i_T$*) corresponding to the electromagnet for building the control model are entered into the current controller (34).

This allows the current controller (34) to generate the voltage command value (V*) during normal operation, such that a current based on the levitation current command value ($i_L$*) flows through the coil (25) of each of the electromagnets (27). On the other hand, when the control model is built, the current controller (34) generates the voltage command value (V*) such that, with respect to the levitating electromagnets, a current based on the levitation current command value ($i_L$*) flows through each of the coils (25), and, with respect to the magnet for building the control model, a current based on the current command value ($i_T$*) flows through each of the coils (25).

-Control Model Building Unit (40)-

The control model building unit (40) includes a microcomputer, and a memory device (which may be an internal memory device of the microcomputer) storing a program operating the microcomputer (omitted in the drawings). The control model building unit (40) may share this microcomputer and the memory device with the controller (30), or be provided with a separate microcomputer and memory device.

The control model building unit (40) of the present embodiment models the relationship between the current flowing through the electromagnets (27), the gap width (G) between the stator (21) and the drive shaft (13), and the electromagnetic force generated at the electromagnets (27) for the saturated region (the second control region (A2)). Specifically, the control model building unit (40) constructs a function or a table showing the relationship between the current, gap width, and electromagnetic force. The control model built is stored in the controller (30), and used when the second converter (33) generates the levitation current command value ($i_L$*). Note that, regarding the control model for the unsaturated region (the first control region (A1)), in a design state, for example, the control model building unit (40) makes an experiment to construct a function or a table showing the relationship between the current, gap width, and electromagnetic force. Subsequently, the control model building unit (40) integrates the function or table in advance into the controller (30) during the construction of the magnetic bearing. The individual difference in the first control region (A1) being comparatively small, the control model for the first control region (A1) is the same for each of the electromagnets (27).

As shown in FIG. 7, the control model building unit (40) of the present embodiment includes an electromagnetic force calculator (41), a current command unit (42), the selector (43), and a correlation calculator (45).

The selector (43) selects one of the electromagnets (27) for building the control model, and outputs, to the first converter (32), the magnet number (T) indicating the electromagnet (27) selected.

The current command unit (42) generates a command value (current command value ($i_T$*)) for current flowing through the coil (25) of the electromagnet (27) used to build the control model, and outputs the command value to the current controller (34). Note that the current command unit (42) sets the current command value ($i_T$*) such that the magnetic flux of the electromagnet (27) used to build the control model falls within the saturated region.

The electromagnetic force calculator (41) calculates electromagnetic force generated by the electromagnets (27) when the control model is built. To calculate the electromagnetic force, a current value of the coil (25) of each of the electromagnets (27) is entered into the electromagnetic force calculator (41). Note that a calculation method of the electromagnetic force will be described in detail later.

Based on calculation results provided by the electromagnetic force calculator (41), the correlation calculator (45) constructs, in form of a function or a table, a correlation curve of the current, electromagnetic force, and gap width (G) of the electromagnets (27) in the saturated region. Note that, by altering the position of the drive shaft (13) via the rotor position command unit (35), the correlation calculator (45) constructs a correlation curve for building the control model for the saturated region, such that the correlation curve may correspond to a gap width (G) of a desired scope.

<Building of Control Model>

In the electromagnetic bearing (20) of the present embodiment, building the control model for the second control region (A2) is performed by, for instance, an instruction given by a user (e.g., manipulation of a control panel by the user), or by program control. Note that program control may include building the control model when, for instance, the magnetic bearing (20) is started up or shut down, or at a time indicated by a timer.

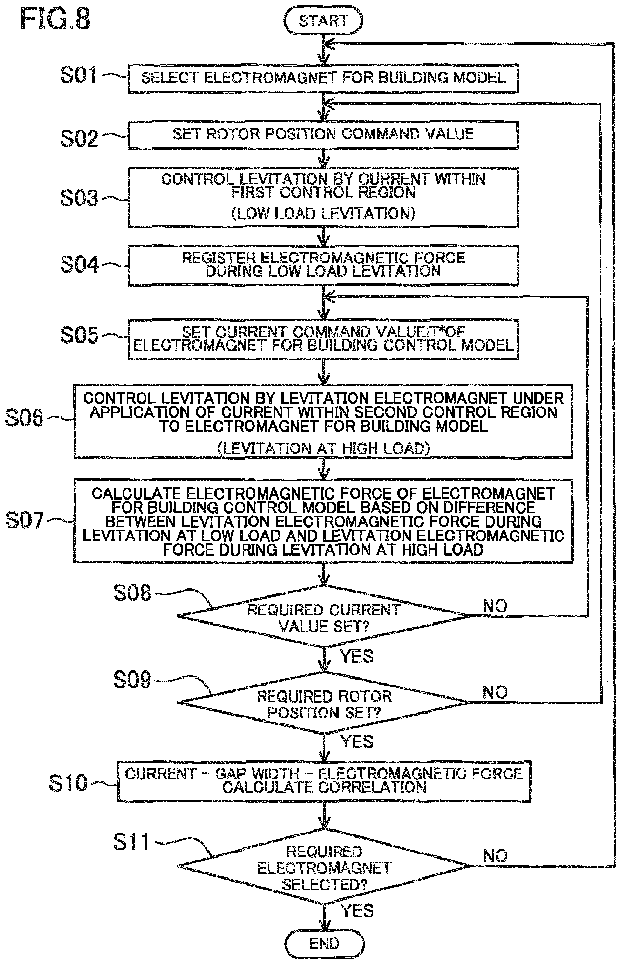

FIG. 8 is flowchart showing how the control model is built according to the first embodiment. As shown in FIG. 8, the controller (30) and the control model building unit (40) perform process steps from step (S01) to step (S11).

In step (S01), the selector (43) selects the electromagnet (27) for building the control model and outputs the electromagnet number (T) indicating the electromagnet (27) selected to the first converter (32). This example explains a process where, first, an electromagnet (corresponding to the electromagnet (27-1) in FIG. 2 and other figures) designated by the electromagnet number T = 1 is selected.

In step (S02), the rotor position command unit (35) selects a gap width (G) required for building the model, generates the rotor position command value (X*) corresponding to the value of the gap width (G), and outputs the rotor position command value (X*) to the position controller (31).

In step (S03), the drive shaft (13) is levitated with the current, which flows to the electromagnet (27-1) for building the control model, controlled within the first control region (A1) and with the current, which is controlled within the first control region (A1), allowed to flow through each of the coils (25) of the other electromagnets (hereinafter referred to as levitation electromagnets). In this example, the electromagnets (27-2) to (27-6), i.e., the electromagnets other than the electromagnet (27-1) corresponding to the electromagnet number T = 1, are levitation electromagnets. Next, the current command unit (42) outputs a current command value ($i_T$*) within the first control region (A1) with respect to the electromagnet (27) for building the control model. Based on the current command value ($i_T$*) sent from the current command unit (42), the current controller (34) then controls the current of the coil (25) of the electromagnet (27-1) for building the control model. On the other hand, the first converter (32) outputs, to the second converter (33), the levitation electromagnetic force command value ($f_L$*) regarding the electromagnets (27-2) to (27-6), which are levitation electromagnets. This value allows the second converter (33) to generate the levitation current command value ($i_L$*) corresponding to the levitation electromagnets using the control model for the first control region (A1), which is stored in the controller (30), and to output the levitation current command value ($i_L$*) to the current controller (34).

Then, the current controller (34) outputs the voltage command value (V*) based on the levitation current command value ($i_L$*). As a result, a predetermined voltage (V) is applied to each of the coils (25), and the current (i) flows through each of the coils (25) of each of the electromagnets (27). By this, the drive shaft (13) is levitated at low load. Here, the phrase "at low load" refers to a state where the drive shaft (13) is supported by the magnetic bearing (20) in a region (in this example the first control region (A1)) the control model for which is already known.

Next, in step (S04), the electromagnetic force calculator (41) calculates the value of the current flowing through the coil (25) of each of the electromagnets (27) during levitation at low load. Moreover, the electromagnetic force calculator (41) memorizes the electromagnetic force required for levitation at low load.

In step (S05), the current command unit (42) sets the current command value ($i_T$*) with respect to the coil (25) of the electromagnet (27-1) for building the control model. More specifically, the current command unit (42) sets the current command value ($i_T$*) such that the intensity of the magnetic flux of the electromagnet (27-1) enters the saturated region (second control region (A2)).

Subsequently, in step (S06), current is allowed to flow through the electromagnet for building the control model and through the levitation electromagnets. Specifically, the second converter (33) outputs the levitation current command value ($i_L$*) with respect to the levitation electromagnets, and the current controller (42) outputs the current command value ($i_T$*) with respect to the electromagnet (27) for building the control model.

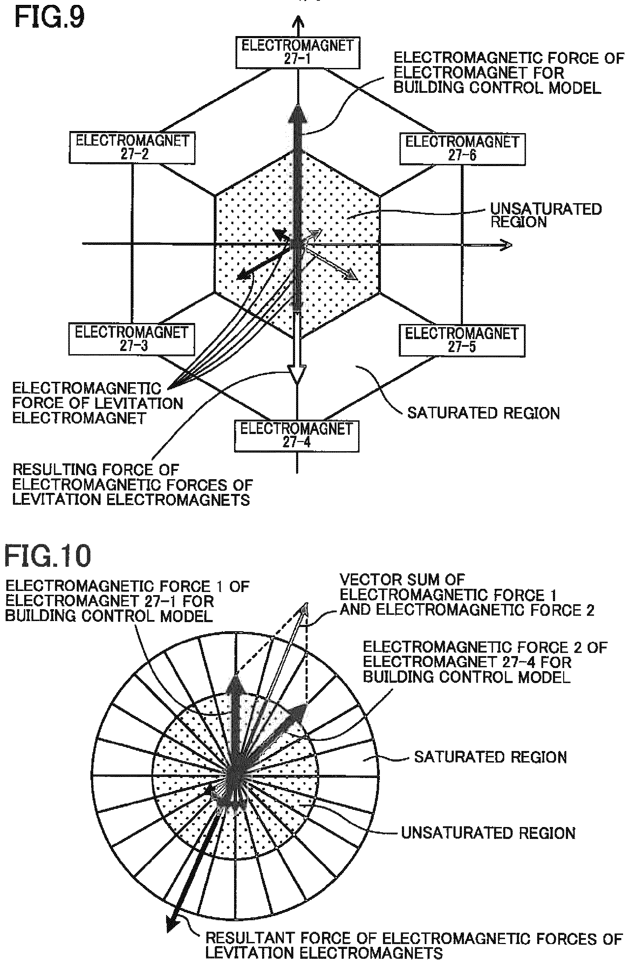

Then, based on the current command value ($i_T$*) sent from the current command unit (42), the current controller (34) controls the current of the coil (25) of the electromagnet (27-1) for building the control model. On the other hand, based on the levitation current command value ($i_L$*), the current controller (34) makes sure that a current controlled within the unsaturated region flows through the coils (25) of the electromagnets (27-2) to (27-6), which are levitation electromagnets. By this, the drive shaft (13) is levitated at high load. FIG. 9 shows an example relationship between the electromagnetic forces of each of the electromagnets when the control model is built.

Next, in step (S07), the electromagnetic force of the levitation electromagnets (calculable based on the control model already known) is used as a basis to calculate the electromagnetic force of the electromagnet (27) for building the control model for the saturated region. Specifically, the electromagnetic force calculator (41) calculates an electromagnetic force (fl) of the electromagnet (27-1) for building the control model, based on a difference between the resultant electromagnetic force (see step (S06)) of the levitation electromagnets during levitation at high load and the resultant electromagnetic force (value memorized in step (S04)) during levitation at low load.

That is, in the present embodiment, the electromagnetic force in the case where the drive shaft (13) is levitated at low load is calculated in advance based on the control model for the first control region (A1). The difference between this electromagnetic force calculated in advance and the resultant electromagnetic force of the levitation electromagnets during levitation at high load is determined as the electromagnetic force to be generated by the electromagnets (27) controlled within the second control region (A2).

In step (S08), regarding all current values required for building the control model, it is assessed whether or not the electromagnetic force of the electromagnet (27-1) for building the control model has been determined. In the case were the electromagnetic force regarding all current values required has been successfully determined, the process moves on to step (S09). If, however, the electromagnetic force regarding a different current value yet needs to be determined, the process returns to step (S05). In step (S05), a desired current command value ($i_T$*) is set, and the current of the electromagnet (27-1) for building the control model is altered.

In step (S09), regarding all gap widths (G) required for building the control model, it is assessed whether or not the electromagnetic force of the electromagnet (27-1) for building the control model has been determined. If a relationship between the current and the electromagnetic force has been established for all gap widths (G) required, the process moves on to step (S10). If that is not the case, the process returns to step (S02) and adjusts the rotor position command value (X*) such that the gap width (G) required is achieved.

In step (S10), the correlation calculator (45) determines a correlation curve of the current, gap width, and electromagnetic force regarding the electromagnet (27-1) for building the control model. The correlation calculator (45) stores the correlation curve in the controller (30) in form of, for example, a function or a table.

Then, in step (S11), it is assessed whether or not the control model for the saturated region with respect to all of the electromagnets (27) has been built. If the control model for the saturated region with respect to all of the electromagnets (27) has been built, the building of the control model is complete. If, however, there is an electromagnet (27) left with no control model built for the saturated region, the process returns to step (S01) and suitably selects an electromagnet (27) among the remaining electromagnets (27) as the electromagnet (27) for building the control model.

<Position Control in Magnetic Bearing>

In the magnetic bearing (20), a control model common for all of the electromagnets (27) is stored in advance in the controller (30) as control model for the unsaturated region (first control region (A1)). Further, building the control model allows for storing control models one for each of the electromagnets (27) in the controller (30) as control models for the saturated region (second control region (A2)).

After the magnetic bearing (20) has been activated, in the case where, for example, the levitation electromagnetic force command value ($f_L$*) generated by the first converter (32) falls within the first control region (A1), the second converter (33) generates the levitation current command value ($i_L$*) using the control model common for all of the electromagnets (27). Further, in the case where the levitation electromagnetic force command value ($f_L$*) generated by the first converter (32) falls within the second control region (A2), the second converter (33) generates the levitation current command value ($i_L$*) using the control models one set for each of the electromagnets (27). This allows for controlling the position of the drive shaft (13) in both the unsaturated region (first control region (A1)) as well as the saturated region (second control region (A2)).

<Advantages of Embodiment>

As can be seen from the above, the present embodiment allows position control in the magnetic bearing even in a region (saturated region) with a large individual difference between the electromagnetic forces. That is, according to the present embodiment, a control region may be extended without increasing the electromagnets in size.

Moreover, values of electromagnetic forces generated by the electromagnets (27) for building the control model are determined using the electromagnetic force at low load determined in advance, which is why the electromagnetic force for the saturated region may be determined more accurately.

Further, when the control model for the second control region (A2) is built, the electromagnets (27) in the magnetic bearing (20) are used as a basis for calculating the electromagnetic force, which is why there is no need to provide any specific measuring device for building the control models.

Also, since the magnetic bearing (20) of the present embodiment includes the control model building unit (40), position control may be performed accurately even if the electromagnetic force of the electromagnets (27) alters with time if, for example, the control model is built for a second time after a device including the magnetic bearing (22) has been installed.

Furthermore, in the saturated region where a control model is built one for each of the electromagnets, more data regarding the electromagnetic force are necessary than for building the control model for the unsaturated region. Therefore, it requires excessive worktime to calculate the electromagnetic force of the saturated region using a measuring device. In the present embodiment, however, the control model building unit (40) allows to build the control model largely automatically. That is, rather than calculating the electromagnetic force of the saturated region using a measuring device, the present embodiment allows for building the control model in a more simple way.

«Variation of First Embodiment»

Note that, in addition to the levitation electromagnets, an already-known disturbance (e.g., gravity) may be used for building the control model.

Specifically, the first converter (32) generates the levitation electromagnetic force command value ($f_L$*) such that a resultant force of the levitation electromagnetic force ($f_L$) and a force of the already-known disturbance (hereinafter "disturbing force") becomes equivalent to the supporting force ($F_{total}$). Further, when calculating the electromagnetic force of the electromagnets (27) for building the control model for the saturated region, the electromagnetic force calculator (41) deducts the electromagnetic force required for the levitation electromagnets to levitate the drive shaft (13) and the disturbing force from the resultant electromagnetic force of the levitation electromagnets.

This allows for using the already-known disturbing force, such as gravity, in building the control model, and thus to build a control model regarding a current and gap width of a wider scope.

«Second Embodiment of Invention»

FIG. 10 shows electromagnetic force of a magnetic bearing (20) according to a second embodiment. In this example, the magnetic bearing includes 24 electromagnets (27). In the saturated region (second control region (A2)), the electromagnetic force is controlled using control models provided one for each of groups of electromagnets (hereinafter referred to as "electromagnet groups"), each of which includes two or more electromagnets (27) included in the magnetic bearing (20). In this example, two electromagnets (27) form one electromagnet group, and one control model corresponds to one electromagnet group.

As shown in FIG. 10, in the control model building unit (40) of the present embodiment, position control is performed such that a vector sum of an electromagnetic force 1 of an electromagnet (27-1), which is one of the electromagnets forming the electromagnet group for building the control model, and an electromagnetic force 2 of an electromagnet (27-4), which faces the electromagnet (27-1), is equal to a resultant electromagnetic force including a combination of electromagnetic forces of the levitation electromagnets. In this way, the vector sum of the electromagnetic force 1 and the electromagnetic force 2 is determined.

In this case, a current flows through each of the electromagnets (27-1) and (27-4) in the electromagnet group for building the control model such that their magnetic flux falls within the saturated region (second control region (A2)). Further, a current flows through the levitation electromagnets, such that a magnetic flux falls within the unsaturated region (first control region (A1)). Like in the first embodiment, the correlation calculator (45) builds a control model for each of the electromagnet groups. As a result, position control in the magnetic bearing (20) may be performed even in a control region (saturated region) with a large individual difference between the electromagnets.

Note that the number of electromagnets forming an electromagnet group is a mere example and not limited to two.

«Third Embodiment of Invention»

If, like in the first embodiment, the electromagnetic force of the electromagnets (levitation electromagnets) controlled within the unsaturated region serves as a basis, the maximum electromagnetic force at which a model can be built is restricted by the resulting electromagnetic force of the electromagnetic forces of the levitation electromagnets.

If, however, the control model for the saturated region is built like in the first embodiment, and if this control model for the saturated region is then used, a range of electromagnetic force at which the model can be built - that is, a control range - may be further extended. Specifically, first, the levitation magnets are controlled within the second control region (A2) or the fist control region (A1) by the previously built control model for the saturated region (second control region (A2)) or the unsaturated region (first control region (A1)). At the same time, the electromagnets (27) for building the control model, which generate a magnetic flux, which is more intense than that falling within the second control region (A2), falling within a control region (here: third control region (A3)), are operated.

Then, the control model building unit (40) performs position control like in the first embodiment such that the gap width (G) reaches a desired value, and determines the electromagnetic force of the electromagnets (27) for building the control model for the third control region (A3). If the electromagnetic force is determined in such a way for each of the electromagnets (27) or for each of the plurality of electromagnet groups regarding all current values and gap widths (G) required for building the model for the third control region (A3), a control model for an extended control region may be obtained.

«Other Embodiments»

Note that the control model for the second control region (A2) may be built during, for example, shipment of the magnetic bearing to a factory, and the control model built may be memorized by the controller (30). In this case, the control model building unit (40) is not installed in the magnetic bearing (20). Instead, the control model building unit (40) may be a part of, for instance, a manufacturing apparatus (or a manufacturing line).

Further, the given number of electromagnets forming the magnetic bearing (20) is only an example.

Moreover, the scope of application of the magnetic bearing (20) is not limited to a turbo-compressor.

Furthermore, the correlation used for the control model is not limited to a combination of three parameters, namely the current (i) flowing through the electromagnets (27), the gap width (G), and the electromagnetic force. Examples of possible correlations include correlations between two or more parameters among the current (i) flowing through the electromagnets (27), the number of flux linkages ($\psi$) passing through the electromagnets (27), the gap width (G) between the stator (21) and the drive shaft (13), the magnetic energy (Wm) of the electromagnets (27), the magnetic co-energy (Wm') in the electromagnets (27), the electromagnetic force generated by the electromagnets (27), as well as a parameter derived using these parameters.

Among these correlating parameters, the number of flux linkages ($\psi$) may be determined based on a value obtained by temporally integrating the voltage resulting from deducting a voltage drop of the coil (25) from a voltage applied to the coil (25) of the electromagnet (27). Note that, in the case where the voltage drop of the coil (25) is lower than the voltage applied to the coil (25), the number of flux linkages ($\psi$) may be determined based on a value obtained by temporally integrating the voltage applied to the coil (25) of the electromagnet (27).

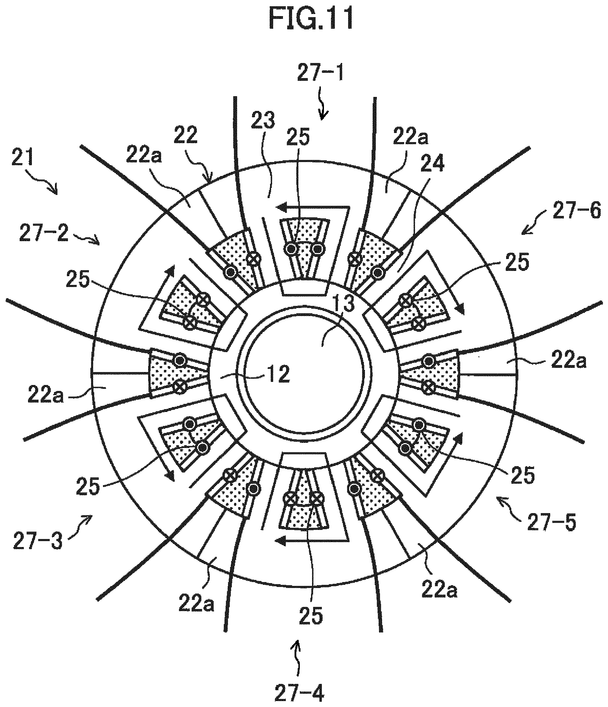

Moreover, the core (22) of the stator (21) may as well be formed by combining a plurality of blocks. FIG. 11 shows an example division of the core (22). In the example shown in FIG. 11, the core (22) includes six core blocks (22a) combined in the back yoke (23). In a structure divided this way, the variation characteristic to the electromagnets (27) is at risk to increase. However, performing the control according to each of the above embodiments allows for achieving a reliable position control. That is, the above-described control is useful when applied in the magnetic bearing (20) including a divided core (22).

INDUSTRIAL APPLICABILITY

The present invention is useful for a magnetic bearing supporting a drive shaft with no contact between the magnetic bearing and the drive shaft.

DESCRIPTION OF REFERENCE CHARACTERS

13    Drive Shaft
20    Magnetic Bearing
21    Stator
27    Electromagnet
30    Controller
40    Control Model Building Unit
41    Electromagnetic Force Calculator

**Claims**

1.  A magnetic bearing comprising:

    a stator (21) having a plurality of electromagnets (27) which apply electromagnetic force to a drive shaft (13); and
    a controller (30) performing position control of the drive shaft (13), **characterized in that** the position control is performed by dividing a control region in two control regions based on an extent of an individual difference between the electromagnets (27) regarding a correlation between two or more parameters among a current (i) flowing through the electromagnets (27), the number of flux linkages ($\psi$) passing through the electromagnets (27), a gap width (G) between the stator (21) and the drive shaft (13), magnetic energy (Wm) of the electromagnets (27), magnetic co-energy (Wm') in the electromagnets (27), electromagnetic force generated by the electromagnets (27), and a parameter calculated based on these parameters, and by using a control model common for all of the electromagnets (27) for a first control region (A1), which is a control region with a small individual difference, and control models provided one for each of the electromagnets (27) or one for each of a predetermined number of electromagnet groups for a second control region (A2), which is a control region with a large individual difference.

2.  The magnetic bearing of claim 1, wherein
    the correlation is a correlation between the current (i) flowing through the electromagnets (27), the gap width (G), and the electromagnetic force, and
    the controller (30) performs the position control of the drive shaft (13) by controlling the electromagnetic force by dividing the control region in two control regions based on the extent of the individual difference between the electromagnets (27) regarding a relationship between the current (i) flowing through the electromagnets (27), the gap width (G), and the electromagnetic force, and by using the control model common for all of the electromagnets (27) for the first control region (A1), which is the control region with the small individual difference, and the control models provided one for each of the electromagnets (27) or one for each of the predetermined number of electromagnet groups for the second control region (A2), which is the control region with the large individual difference.

3. The magnetic bearing of claim 2, comprising:

an electromagnetic force calculator (41) calculating, based on the control model for the first control region (A1), a resultant force including a combination of electromagnetic forces generated by the electromagnets (27) controlled within the first control region (A1), and calculating, based on this resultant force, an electromagnetic force generated by the electromagnets (27) controlled within the second control region (A2) in a state where the position control is performed by controlling part of the electromagnets (27) within the second control region (A2) and other predetermined electromagnets (27) within the first control region (A1); and
a control model building unit (40) building the control model used for the second control region (A2) based on the electromagnetic force of the electromagnets (27) controlled within the second control region (A2), the electromagnetic force having been calculated by the electromagnetic force calculator (41).

4. The magnetic bearing of claim 3, wherein
the electromagnetic force calculator (41) calculates in advance an electromagnetic force, which allows the drive shaft (13) to levitate at low load, based on the control model for the first control region (A1), and determines a difference between the electromagnetic force and the resultant force already calculated as the electromagnetic force generated by the electromagnets (27) controlled within the second control region (A2).

5. The magnetic bearing of claim 3 or 4, wherein
in a state where the position control is performed by controlling part of the electromagnets (27) within a third control region (A3), in which electromagnetic force generated is stronger than in the second control region (A2), and predetermined other part of the electromagnets (27) within the second control region (A2) or the first control region (A1), the electromagnetic force calculator (41) calculates, based on the control models for the second control region (A2) or the first control region (A1), the electromagnetic force generated by the electromagnets (27) controlled within the second control region (A2) or the first control region (A1), and calculates, based on the electromagnetic force calculated, the electromagnetic force generated by the electromagnets (27) controlled within the third control region (A3), and
the control model building unit (40) builds a control model used for the third control region (A3) based on calculation results provided by the electromagnetic force calculator (41).

6. The magnetic bearing of claim 1, wherein
the correlation is a correlation between the number of flux linkages ($\psi$), the gap width (G), and the electromagnetic force, and
the controller (30) controls the position of the drive shaft (13) by controlling the electromagnetic force by dividing the control region in two control regions based on the extent of the individual difference between the electromagnets (27) regarding the relationship between the number of flux linkages ($\psi$), the gap width (G), and the electromagnetic force, and by using the control model common for all of the electromagnets (27) for the first control region (A1), which is the control region with the small individual difference, and the control models provided one for each of the electromagnets (27) or one for each of a predetermined number of electromagnet groups for the second control region (A2), which is the control region with the large individual difference.

7. The magnetic bearing of claim 6, wherein
the controller (30) determines the number of flux linkages ($\psi$) based on a value obtained by temporally integrating a voltage applied to the coil (25) of the electromagnets (27).

8. The magnetic bearing of claim 6, wherein
the controller (30) determines the number of flux linkages ($\psi$) based on a value obtained by temporally integrating a voltage resulting from deducting a voltage drop of the coil (25) from a voltage applied to the coil (25) of the electromagnets (27).

9. The magnetic bearing of any one of claims 1 to 8, wherein
a core (22), which is the stator (21), is formed by combining a plurality of core blocks (22a).

**Patentansprüche**

1. Magnetlager, umfassend:

   einen Stator (21) mit einer Vielzahl von Elektromagneten (27), die eine elektromagnetische Kraft auf eine Antriebswelle (13) ausüben; und
   eine Steuerung (30) zur Durchführung einer Positionssteuerung der Antriebswelle (13), **dadurch gekennzeichnet, dass** die Positionssteuerung durchgeführt wird durch Aufteilen eines Kontrollbereichs in zwei Kontrollbereiche auf Basis eines Ausmaßes einer individuellen Differenz zwischen den Elektromagneten (27) bezüglich einer Korrelation zwischen zwei oder mehr Parametern von einem Strom (i), der durch die Elektromagneten (27) fließt, der Anzahl von Flussverkettungen ($\Psi$), die durch die Elektromagneten (27) treten, einer Spaltbreite (G) zwischen dem Stator (21) und der Antriebswelle (13), magnetischer Energie (Wm) der Elektromagneten (27), magnetischer Co-Energie (Wm') in den Elektromagneten (27), von den Elektromagneten (27) erzeugter elektromagnetischer Kraft, und einem basierend auf diesen Parametern berechneten Parameter, und durch Verwendung eines für alle Elektromagneten (27) gemeinsamen Steuermodells für einen ersten Steuerbereich (A1), der ein Steuerbereich mit einer geringen individuellen Differenz ist, und von Steuermodellen, wobei eines für jeden der Elektromagneten (27) oder eines für jede einer vorab bestimmten Anzahl von Elektromagnetgruppen bereitgestellt ist, für einen zweiten Steuerbereich (A2), der ein Steuerbereich mit einer großen individuellen Differenz ist.

2. Magnetlager nach Anspruch 1, wobei
   die Korrelation eine Korrelation zwischen dem Strom (i), der durch die Elektromagnete (27) fließt, der Spaltbreite (G) und der elektromagnetischen Kraft ist, und
   die Steuerung (30) die Positionssteuerung der Antriebswelle (13) durchführt durch Steuerung der elektromagnetischen Kraft durch Aufteilen des Steuerbereiches in zwei Steuerbereiche auf Basis des Ausmaßes der individuellen Differenz zwischen den Elektromagneten (27) bezüglich einer Beziehung zwischen dem Strom (i), der durch die Elektromagneten (27) fließt, der Spaltbreite (G) und der elektromagnetischen Kraft und durch Verwendung des für alle Elektromagneten (27) gemeinsamen Steuermodells für den ersten Steuerbereich (A1), der der Steuerbereich mit der geringen individuellen Differenz ist, und der Steuermodelle, wobei eines für jeden der Elektromagnete (27) oder eines für jede einer vorab festgelegten Anzahl von Elektromagnetgruppen bereitgestellt ist, für den zweiten Steuerbereich (A2), der der Steuerbereich mit der großen individuellen Differenz ist.

3. Magnetlager nach Anspruch 2, umfassend:

   eine Einrichtung (41) zur Berechnung einer elektromagnetischen Kraft, die, auf Basis des Steuermodells für den ersten Steuerbereich (A1), eine resultierende Kraft berechnet, die eine Kombination von elektromagnetischen Kräften, die von den Elektromagneten (27) erzeugt werden, die in dem ersten Steuerbereich (A1) gesteuert werden, enthält, und zur Berechnung, auf Basis dieser resultierenden Kraft, einer von den Elektromagneten (27) erzeugten elektromagnetischen Kraft, die in dem zweiten Steuerbereich (A2) gesteuert wird, in einem Zustand, in dem die Positionssteuerung durch Steuerung eines Teils der Elektromagneten (27) in dem zweiten Steuerbereich (A2) und anderer vorab festgelegter Elektromagnete (27) in dem ersten Steuerbereich (A1) durchgeführt wird; und
   eine Steuermodellbildeeinheit (40) zum Bilden des für den zweiten Steuerbereich (A2) verwendeten Steuermodells basierend auf der elektromagnetischen Kraft der in dem zweiten Steuerbereich (A2) gesteuerten Elektromagnete (27), wobei die elektromagnetische Kraft von der Einrichtung (41) zur Berechnung einer elektromagnetischen Kraft berechnet worden ist.

4. Magnetlager nach Anspruch 3, wobei
   die Einrichtung (41) zur Berechnung einer elektromagnetischen Kraft im Voraus eine elektromagnetische Kraft berechnet, die ermöglicht, dass die Antriebswelle (13) eine geringe Last anhebt, basierend auf dem Steuermodell für den ersten Steuerbereich (A1), und eine Differenz zwischen der elektromagnetischen Kraft und der resultierenden Kraft bestimmt, die bereits als die von den im zweiten Steuerbereich (A2) gesteuerten Elektromagneten (27) erzeugte elektromagnetische Kraft berechnet ist.

5. Magnetlager nach Anspruch 3 oder 4, wobei
   in einem Zustand, in dem die Positionssteuerung durch Steuern eines Teils der Elektromagnete (27) in einem dritten Steuerbereich (A3), in dem die erzeugte elektromagnetische Kraft stärker ist als in dem zweiten Steuerbereich (A2), und eines vorab bestimmten anderen Teils der Elektromagnete (27) in dem zweiten Steuerbereich (A2) oder dem ersten Steuerbereich (A1) durchgeführt wird, die Einrichtung (41) zur Berechnung einer elektromagnetischen Kraft, auf Basis der Steuermodelle für den zweiten Steuerbereich (A2) oder den ersten Steuerbereich (A1), die von den in dem zweiten Steuerbereich (A2) oder dem ersten Steuerbereich (A1) gesteuerten Elektromagneten (27) erzeugte elektromagnetische Kraft berechnet und, auf Basis der berechneten elektromagnetischen Kraft, die von den in dem dritten Steuerbereich (A3) gesteuerten Elektromagneten (27) erzeugte elektromagnetische Kraft berechnet, und die Steuermodellbildeinheit (40) ein für den dritten Steuerbereich (A3) verwendetes Steuermodell auf Basis von von der Einrichtung (41) zur Berechnung einer elektromagnetischen Kraft bereitgestellten Berechnungsergebnissen bildet.

6.  Magnetlager nach Anspruch 1, wobei die Korrelation eine Korrelation zwischen der Anzahl von Flussverkettungen (Ψ), der Spaltbreite (G) und der elektromagnetischen Kraft ist, und
die Steuerung (30) die Position der Antriebswelle (13) durch Steuern der elektromagnetischen Kraft durch Aufteilen des Steuerbereiches in zwei Steuerbereiche auf Basis des Ausmaßes der individuellen Differenz zwischen den Elektromagneten (27) bezüglich der Beziehung zwischen der Anzahl von Flussverkettungen (Φ), der Spaltbreite (G) und der elektromagnetischen Kraft und durch Verwendung des für alle Elektromagneten (27) gemeinsamen Steuermodells für den ersten Steuerbereich (A1), der der Steuerbereich mit der geringen individuellen Differenz ist, und der Steuermodelle, wobei eines für jeden der Elektromagneten (27) oder eines für jede einer vorab bestimmten Anzahl von Elektromagnetgruppen bereitgestellt ist, für den zweiten Steuerbereich (A2), der der Steuerbereich mit der großen individuellen Differenz ist.

7.  Magnetlager nach Anspruch 6, wobei
die Steuerung (30) die Anzahl von Flussverkettungen (Ψ) auf Basis eines Werts bestimmt, der durch zeitliche Integration einer an die Spule (25) der Elektromagneten (27) angelegten Spannung erhalten ist.

8.  Magnetlager nach Anspruch 6, wobei
die Steuerung (30) die Anzahl von Flussverkettungen (Ψ) auf Basis eines Werts bestimmt, der durch zeitliche Integration einer Spannung erhalten ist, die aus Abziehen eines Spannungsabfalls der Spule (25) von einer an die Spule (25) der Elektromagnete (27) angelegten Spannung resultiert.

9.  Magnetlager nach einem der Ansprüche 1 bis 8, wobei
ein Kern (22), der der Stator (21) ist, durch Kombinieren einer Vielzahl von Kernblöcken (22a) gebildet ist.

**Revendications**

1.  Palier magnétique, comprenant :

    un stator (21) possédant une pluralité d'électroaimants (27) appliquant une force électromagnétique sur un arbre d'entraînement (13) ; et
    un contrôleur (30) effectuant un contrôle de position sur l'arbre d'entraînement (13),
    **caractérisé en ce que** le contrôle de position est effectué en divisant une zone de contrôle en deux zones de contrôle d'après une ampleur d'une différence individuelle entre les électroaimants (27) concernant une corrélation entre deux ou plusieurs paramètres parmi un courant (i) s'écoulant à travers les électroaimants (27), le nombre de liaisons de flux (Ψ) passant à travers les électroaimants (27), une largeur d'écart (G) entre le stator (21) et l'arbre d'entraînement (13), une énergie magnétique (Wm) des électroaimants (27), une co-énergie magnétique (Wm') dans les électroaimants (27), une force électromagnétique générée par les électroaimants (27), et un paramètre calculé d'après ces paramètres, et en utilisant un modèle de contrôle commun à tous les électroaimants (27) pour une première zone de contrôle (A1), qui est une zone de contrôle présentant une légère différence individuelle, et des modèles de contrôle fournis, dont un pour chacun des électroaimants (27), et un pour chacun d'un nombre prédéterminé de groupes d'électroaimants pour une deuxième zone de contrôle (A2), qui est une zone de contrôle présentant une grande différence individuelle.

2.  Palier magnétique selon la revendication 1, dans lequel
la corrélation est une corrélation entre le courant (i) s'écoulant à travers les électroaimants (27), la largeur d'écart (G), et la force électromagnétique, et
le contrôleur (30) effectue le contrôle de position de l'arbre d'entraînement (13) en contrôlant la force électromagnétique en divisant la zone de contrôle en deux zones de contrôle d'après l'ampleur de la différence individuelle entre les électroaimants (27) concernant un rapport entre le courant (i) s'écoulant dans les électroaimants (27), la largeur de l'écart (G), et la force électromagnétique, et en utilisant le modèle de contrôle commun à tous les électroaimants (27) pour la première zone de contrôle (A1), à savoir la zone de contrôle présentant la légère différence individuelle, et les modèles de contrôle fournis, dont un pour chacun des électroaimants (27) ou un pour chacun du nombre prédéterminé de groupes d'électroaimants pour la deuxième zone de contrôle (A2), qui est la zone de contrôle présentant la grande différence individuelle.

3. Palier magnétique selon la revendication 2, comprenant :

un calculateur de force électromagnétique (41) calculant, d'après le modèle de contrôle pour la première zone de contrôle (A1), une force résultante comprenant une combinaison de forces électromagnétiques générées par les électroaimants (27) contrôlés dans la première zone de contrôle (A1), et calculant, d'après cette force résultante, une force électromagnétique générée par les électroaimants (27) contrôlés dans la deuxième zone de contrôle (A2), dans un état où le contrôle de position est effectué en contrôlant une partie des électroaimants (27) dans la deuxième zone de contrôle (A2), et d'autres électroaimants prédéterminés (27) dans la première zone de contrôle (A1) ; et
un dispositif de modélisation (40) construisant le modèle de contrôle utilisé pour la deuxième zone de contrôle (A2) d'après la force électromagnétique des électroaimants (27) contrôlés dans la deuxième zone de contrôle (A2), la force électromagnétique ayant été calculée par le calculateur de force électromagnétique (41).

4. Palier magnétique selon la revendication 3, dans lequel
le calculateur de force électromagnétique (41) calcule, au préalable, une force électromagnétique permettant la lévitation de l'arbre d'entraînement (13) sous faible charge, d'après le modèle de contrôle pour la première zone de contrôle (A1), et détermine une différence entre la force électromagnétique et la force résultante déjà calculée en tant que force électromagnétique générée par les électroaimants (27) contrôlés au sein de la deuxième zone de contrôle (A2), et

5. Palier magnétique selon la revendication 3 ou 4, dans lequel
dans un état où le contrôle de position s'effectue en contrôlant une partie des électroaimants (27) dans une troisième zone de contrôle (A3), dans laquelle la force électromagnétique générée est plus forte que dans la deuxième zone de contrôle (A2), et l'autre partie prédéterminée des électroaimants (27) dans la deuxième zone de contrôle (A2) ou la première zone de contrôle (A1), le calculateur de force électromagnétique (41) calcule, d'après les modèles de contrôle pour la deuxième zone de contrôle (A2) ou la première zone de contrôle (A1), la force électromagnétique générée par les électroaimants (27) contrôlés dans la deuxième zone de contrôle (A2) ou la première zone de contrôle (A1), et calcule, d'après la force électromagnétique calculée, la force électromagnétique générée par les électroaimants (27) contrôlés dans la troisième zone de contrôle (A3), et
le dispositif de modélisation (40) construit un modèle de contrôle utilisé pour la troisième zone de contrôle (A3) d'après les résultats de calculs fournis par le calculateur de force électromagnétique (41).

6. Palier magnétique selon la revendication 1, dans lequel
la corrélation est une corrélation entre le nombre de liaisons de flux ($\Psi$), la largeur d'écart (G), et la force électromagnétique, et
le contrôleur (30) contrôle la position de l'arbre d'entraînement (13) en contrôlant la force électromagnétique en divisant la zone de contrôle en deux zones de contrôle d'après l'ampleur de la différence individuelle entre les électroaimants (27) concernant le rapport entre le nombre de liaisons de flux ($\Psi$), la largeur d'écart (G), et la force électromagnétique, et en utilisant le modèle de contrôle commun à tous les électroaimants (27), pour la première zone de contrôle (A1), à savoir la zone de contrôle présentant la légère différence individuelle, et les modèles de contrôle fournis, dont un pour chacun des électroaimants (27), et un pour chacun d'un nombre prédéterminé de groupes d'électroaimants pour la deuxième zone de contrôle (A2), qui est la zone de contrôle présentant la grande différence individuelle.

7. Palier magnétique selon la revendication 6, dans lequel
le contrôleur (30) détermine le nombre de liaisons de flux ($\Psi$) d'après une valeur obtenue en intégrant provisoirement une tension appliquée sur la bobine (25) des électroaimants (27).

8. Palier magnétique selon la revendication 6, dans lequel
le contrôleur (30) détermine le nombre de liaisons de flux ($\Psi$) d'après une valeur obtenue en intégrant provisoirement une tension résultant de la déduction d'une baisse de tension de la bobine (25) de la tension appliquée sur la bobine (25) des électroaimants (27).

**9.** Palier magnétique selon une quelconque des revendications 1 à 8, dans laquelle
un noyau (22), qui est le stator (21), est formé en combinant une pluralité de blocs de noyau (22a).

FIG.1

# FIG.2

# FIG.3

# FIG.4

MAGNETIC FLUX

CORRELATION CURVE DIFFERS WITH
EACH ELECTROMAGNET

SATURATED REGION

STHRESHOLD VALUE $\phi_s$

UNSATURATED REGION

GAP WIDTH: BIG

GAP WIDTH: MEDIUM

GAP WIDTH: SMALL

CURRENT

# FIG.5

ELECTROMAGNETIC
FORCE f

$f_s$

PROPERTIES
REPRESENTED
BY
EQUATION (A)

$i_s$

CURRENT i

UNSATURATED
REGION

SATURATED
REGION

# FIG.6

GAP WIDTH

CURRENT × GAP WIDTH ≈ MAGNETIC FLUX THRESHOLD VALUE

SATURATED REGION
(CORRELATION UNKNOWN)

UNSATURATED REGION
(CORRELATION KNOWN)

CURRENT

EP 3 168 487 B1

# FIG.7

45 · 40 · 41

**CONTROL MODEL BUILDING UNIT**

(CURRENT – GAP WIDTH – ELECTROMAGNETIC FORCE) CORRELATION CALCULATOR

ELECTROMAGNETIC FORCE CALCULATOR

SELECTOR

CURRENT COMMAND UNIT

43 · 42

CURRENT COMMAND VALUE $i_T^*$

T CORRECTED ELECTROMAGNET NUMBER

30 **CONTROLLER**

ROTOR POSITION COMMAND VALUE $X^*$

35 ROTOR POSITION COMMAND UNIT

SUPPORTING FORCE COMMAND VALUE $F_{total}^*$

LEVITATION ELECTROMAGNETIC FORCE COMMAND VALUE $f_L^*$

LEVITATION CURRENT COMMAND VALUE $i_L^*$

POSITION CONTROLLER — 31

FIRST CONVERTER — 32

SECOND CONVERTER — 33

COIL CURRENT COMMAND VALUE $i^*$

34 CURRENT CONTROLLER

VOLTAGE COMMAND VALUE $V^*$

POWER SUPPLY UNIT — 50

VOLTAGE $V$

COIL — 25

COIL CURRENT $i$

ELECTROMAGNETIC FORCE $f$

MAGNETIC BEARING ELECTROMAGNET

SUPPORTING FORCE $F_{total}$

COMBINATION OF FORCES

KINETIC SYSTEM OF ROTOR (DRIVE SHAFT)

ROTOR POSITION $X$ — 26

23

# FIG.8

```
                    ( START )
                        │
                        ▼
S01 ─┤ SELECT ELECTROMAGNET FOR BUILDING MODEL │
                        │
                        ▼
S02 ─┤ SET ROTOR POSITION COMMAND VALUE │
                        │
                        ▼
S03 ─┤ CONTROL LEVITATION BY CURRENT WITHIN
       FIRST CONTROL REGION
       (LOW LOAD LEVITATION) │
                        │
                        ▼
S04 ─┤ REGISTER ELECTROMAGNETIC FORCE
       DURING LOW LOAD LEVITATION │
                        │
                        ▼
S05 ─┤ SET CURRENT COMMAND VALUE iT* OF
       ELECTROMAGNET FOR BUILDING CONTROL MODEL │
                        │
                        ▼
S06 ─┤ CONTROL LEVITATION BY LEVITATION ELECTROMAGNET UNDER
       APPLICATION OF CURRENT WITHIN SECOND CONTROL REGION
       TO ELECTROMAGNET FOR BUILDING MODEL
       (LEVITATION AT HIGH LOAD) │
                        │
                        ▼
S07 ─┤ CALCULATE ELECTROMAGNETIC FORCE OF ELECTROMAGNET
       FOR BUILDING CONTROL MODEL BASED ON DIFFERENCE
       BETWEEN LEVITATION ELECTROMAGNETIC FORCE DURING
       LEVITATION AT LOW LOAD AND LEVITATION ELECTROMAGNETIC
       FORCE DURING LEVITATION AT HIGH LOAD │
                        │
                        ▼
S08 ─<  REQUIRED CURRENT VALUE SET? >── NO
                        │ YES
                        ▼
S09 ─<  REQUIRED ROTOR POSITION SET? >── NO
                        │ YES
                        ▼
S10 ─┤ CURRENT – GAP WIDTH – ELECTROMAGNETIC FORCE
       CALCULATE CORRELATION │
                        │
                        ▼
S11 ─<  REQUIRED ELECTROMAGNET SELECTED? >── NO
                        │ YES
                        ▼
                    ( END )
```

# FIG.9

ELECTROMAGNET 27-1

ELECTROMAGNETIC FORCE OF ELECTROMAGNET FOR BUILDING CONTROL MODEL

ELECTROMAGNET 27-2

ELECTROMAGNET 27-6

UNSATURATED REGION

ELECTROMAGNET 27-3

ELECTROMAGNET 27-5

ELECTROMAGNETIC FORCE OF LEVITATION ELECTROMAGNET

SATURATED REGION

ELECTROMAGNET 27-4

RESULTING FORCE OF ELECTROMAGNETIC FORCES OF LEVITATION ELECTROMAGNETS

# FIG.10

ELECTROMAGNETIC FORCE 1 OF ELECTROMAGNET 27-1 FOR BUILDING CONTROL MODEL

VECTOR SUM OF ELECTROMAGNETIC FORCE 1 AND ELECTROMAGNETIC FORCE 2

ELECTROMAGNETIC FORCE 2 OF ELECTROMAGNET 27-4 FOR BUILDING CONTROL MODEL

SATURATED REGION

UNSATURATED REGION

RESULTANT FORCE OF ELECTROMAGNETIC FORCES OF LEVITATION ELECTROMAGNETS

# FIG.11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10501326 B

- JP 2013068309 A